Europäisches Patentamt

**European Patent Office**

**Office européen des brevets**

(11) Numéro de publication : **0 035 935**
**B1**

(12)  **FASCICULE DE BREVET EUROPÉEN**

(45) Date de publication du fascicule du brevet :
28.12.83

(51) Int. Cl.³ : **C 10 L   1/02**

(21) Numéro de dépôt : **81400323.2**

(22) Date de dépôt : **02.03.81**

(54) **Hydrogénation et éthérification d'une coupe insaturée C₅ d'hydrocarbures en vue d'en améliorer l'indice d'octane et d'en réduire la teneur en mono-oléfines.**

(30) Priorité : **10.03.80 FR 8005365**

(43) Date de publication de la demande :
**16.09.81 Bulletin 81/37**

(45) Mention de la délivrance du brevet :
**28.12.83 Bulletin 83/52**

(84) Etats contractants désignés :
**AT BE CH DE GB IT LI NL SE**

(56) Documents cités :
**FR-A- 2 411 881**
**GB-A-   278 341**
**US-A- 2 952 612**

(73) Titulaire : **INSTITUT FRANÇAIS DU PETROLE**
**4, Avenue de Bois-Préau**
**F-92502 Rueil-Malmaison (FR)**

(72) Inventeur : **Derrien, Michel**
**5, rue Fillette Nicolas Philibert**
**F-92500 Rueil-Malmaison (FR)**
Inventeur : **Cosyns, Jean**
**50, route d'Herbeville**
**F-78580 Maule (FR)**
Inventeur : **Torck, Bernard**
**33, rue Vauthier**
**F-92100 Boulogne Sur Seine (FR)**

Jouve, 18, rue St-Denis, 75001 Paris, France

Hydrogénation et éthérification d'une coupe insaturée $C_5$ d'hydrocarbures en vue d'en améliorer l'indice d'octane et d'en réduire la teneur en mono-oléfines

La présente invention concerne un procédé de production d'une fraction d'essence présentant un indice d'octane élevé et une teneur faible ou nulle en hydrocarbures oléfiniques.

Parmi les procédés connus de production d'essence d'hydrocarbures, les procédés de pyrolyse jouent un rôle important, notamment le cracking à la vapeur d'eau (steam-cracking), le cracking catalytique et le coking. C'est ainsi que le cracking d'hydrocarbures à la vapeur d'eau permet d'obtenir, outre de l'éthylène, divers produits dont une fraction $C_5$ ou $C_5^+$, par exemple une fraction $C_5^+$ ayant un point final de distillation entre 150 et 220 °C.

Un traitement conventionnel consiste à hydogéner sélectivement les hydrocarbures les plus insaturés de ces fractions, notamment les hydrocarbures dioléfiniques et les hydrocarbures alkénylaromatiques sans convertir sensiblement les hydrocarbures mono-oléfiniques et les hydrocarbures alkylaromatiques en hydrocarbures saturés. Dans certains cas, seule la fraction $C_5$ est traitée, les hydrocarbures $C_6$-$C_8$ étant séparés au préalable et réservés à la production d'hydrocarbures aromatiques ; dans d'autres cas, c'est la totalité de la coupe $C_5^+$ qui est soumise à cette hydrogénation.

On obtient ainsi des essences à forte teneur en mono-oléfines dont l'indice d'octane n'est pas pleinement satisfaisant puisque, si l'indice d'octane recherche (F1) est élevé, l'indice d'octane moteur (F2) est médiocre. C'est surtout le cas de la fraction $C_5$ dont le F1 clair est voisin de 95 mais le F2 clair est seulement d'environ 80.

Une autre source d'essence est constituée par les essences de cracking catalytique, par exemple l'essence de cracking catalytique en lit fluide (Fcc). Cette essence, riche en mono-oléfines, est pratiquement dépourvue de dioléfines et d'hydrocarbures alkénylaromatiques ; elle peut donc être utilisée telle quelle, sans avoir à subir une hydrogénation sélective telle qu'appliquée aux essences de cracking à la vapeur d'eau.

On sait par ailleurs que l'on peut modifier les fractions $C_5$ contenant des mono-oléfines par mise en réaction avec un alcool en présence d'un catalyseur acide : les mono-oléfines $C_5$ ayant un atome de carbone tertiaire participant à la double liaison insaturée, c'est-à-dire le méthyl-2 butène-1 et le méthyl-2 butène-2, réagissent de manière assez sélective et donnent un éther. Cette opération est doublement avantageuse :

— D'une part on augmente l'indice d'octane moteur (NOM), en tranformant des oléfines à faible NOM en éther à NOM élevé ; d'autre part, en diminuant la teneur en oléfines, on améliore la susceptibilité au plomb de l'ensemble, fait intéressant puisque, dans de nombreux pays, on exige une réduction de la teneur des essences en additifs au plomb.

Il se trouve en effet que, bien que l'on mesure communément le nombre d'octanes « Recherche » et le nombre d'octanes « Moteur », le nombre d'octanes Moteur est plus proche des réalités et plus conforme aux exigences actuelles des moteurs. C'est ainsi qu'en République Fédérale d'Allemagne, outre l'indice d'octanes recherche, une nouvelle réglementation impose en outre le nombre d'octanes moteur. C'est ainsi également qu'aux USA, on prend en compte la moyenne des indices d'octane : F1 + F2/2.

La modification d'une essence ou d'une fraction $C_5$ par conversion du méthyl-2 butène-1 (M2B1) et du méthyl-2 butène-2 (M2B2) en méthyl tertioamyl éther a déjà été proposée, par exemple dans le GB-A-1 176 620, US-A-3 482 952 et le FR-A-2 411 881. Ce dernier brevet propose l'application du procédé à une fraction d'essence partiellement hydrogénée, résultant du craquage à la vapeur d'eau de naphta ou de coupes plus lourdes d'hydrocarbures : cette fraction d'essence partiellement hydrogénée est distillée pour fournir une coupe $C_5$ que l'on met en réaction avec le méthanol.

L'hydrogénation partielle, aussi appelée hydrogénation sélective, d'une coupe $C_5$ (ou d'une essence renfermant une telle coupe), provenant d'un cracking à la vapeur d'eau, aboutit à convertir au moins 90 % des dioléfines aliphatiques et cycloaliphatiques $C_5$ en mono-oléfines, la conversion des mono-oléfines (initiales + formées à partir des dioléfines) étant elle-même faible à nulle, par exemple de l'ordre de 10 à 20 % au maximum.

Il en résulte que si l'on éthérifie une telle coupe par un alcool, on obtient une coupe $C_5$ renfermant un éther (le tertioamyl méthyl éther ou TAME si l'on est parti de méthanol) et une proportion élevée de mono-oléfines, essentiellement des n-mono-oléfines et des cyclomono-oléfines qui n'ont pas réagi avec l'alcool.

Il a maintenant été découvert que l'on avait avantage à soumettre à un hydrotraitement plus poussé une coupe $C_5$ de pyrolyse (ou une essence renfermant une telle coupe, à condition d'en retirer ensuite la coupe $C_5$), de telle manière que le M2B1 et le M2B2 présents et potentiels (c'est-à-dire l'isoprène) demeurent non convertis en hydrocarbures saturés, ou convertis à moins de 10 %, de préférence moins de 5 %, en de tels hydrocarbures, mais que les autres oléfines (mono- et di- oléfines) soient converties à plus de 30 %, de préférence à 50-90 %, en hydrocarbures saturés. La coupe $C_5$ fortement hydrogénée ainsi obtenue (éventuellement après qu'on l'ait séparée du reste de l'essence si l'hydrogénation a porté sur une essence), qui renferme encore pratiquement toutes les mono-oléfines convertibles en l'éther désiré, par exemple le TAME, est ensuite éthérifiée au moyen d'alcool, de manière connue en soi. On obtient ainsi une fraction $C_5$ renfermant une large proportion d'hydrocarbures oléfiniques, habituellement inférieure à 20 %, par exemple 2 à 10 %, en poids, ce qui constitue un premier avantage. Cette coupe présente un indice d'octane moteur plus élevé que celui de la coupe obtenue quand on éthérifie directement une coupe $C_5$ riche en mono-oléfines provenant d'un cracking catalytique ou obtenue par hydrogénation sélective conventionnelle d'une essence de craquage à la vapeur d'eau, et ceci est un second avantage.

Le mécanisme de l'hydrogénation relativement poussée, mise en œuvre dans l'invention, repose largement sur les constatations suivantes : les dioléfines sont pratiquement complètement hydrogénées en mono-oléfines, les mono-oléfines externes du type pentène-1 ou méthyl-3 butène-1 sont en large proportion isomérisées en pentène-2 ou méthyl-2 butène-2 respectivement avec hydrogénation partielle des n-pentènes ainsi que du cyclopentène. Il en résulte expérimentalement un gain sur le nombre d'octane moteur, point faible de ces coupes $C_5$ de pyrolyse, ainsi qu'une augmentation de la teneur en M2B1 et M2B2 éthérifiables, donc un supplément de gain d'octane par éthérification.

Un autre point important à considérer est le suivant : il a été constaté que l'effet d'amélioration du nombre d'octane dû au TAME est bien plus important quand ce composé est mélangé à des hydrocarbures saturés que lorsqu'il est mélangé à des hydrocarbures éthyléniques. On obtient donc, selon l'invention, un effet bénéfique accru de l'addition de TAME.

Dans le cas d'une coupe $C_5$ de Fcc, il n'y a pratiquement pas de dioléfines ; la réaction d'hydrogénation est donc principalement une isomérisation et hydrogénation des oléfines linéaires et une isomérisation du M3B1, ce qui apporte des avantages comparables.

Les catalyseurs connus ne sont pas tous équivalents pour réaliser cette hydrogénation. Il a été trouvé qu'un catalyseur au palladium convenait particulièrement à condition d'être utilisé dans des conditions opératoires relativement sévères. Ce catalyseur est habituellement formé de 0,2 à 2 % en poids de palladium et d'un support, par exemple l'alumine ou la silice.

On peut également opérer avec un catalyseur au nickel. Un monde opératoire préféré consiste à utiliser au moins un lit de catalyseur au nickel suivi d'au moins un lit de catalyseur au palladium.

Les conditions de la réaction d'hydrogénation sont choisies de manière à obtenir la conversion désirée, définie plus haut. Quelques expériences simples permettent de déterminer ces conditions au mieux dans chaque cas particulier. Dans le cas d'une coupe $C_5$ déjà isolée, la température d'hydrogénation est habituellement choisie entre 50 et 200 °C, en adoptant de préférence une température de sortie de zone de réaction d'au moins 120 °C ; la pression est avantageusement choisie entre 5 et 60 bars, de préférence entre 20 et 50 bars ; la vitesse horaire de passage de la charge liquide (VVH) est de 0,5 à 10, de préférence 2 à 4 volumes par volume de catalyseur.

Dans le cas d'une essence $C_5$-point final dont le point final est, par exemple, de 150 à 220 °C, la température est de 50 à 220 °C, en adoptant de péférence une température de sortie d'au moins 150 °C ; la pression et la vitesse horaire sont comme ci-dessus.

Il est clair que ces variables opératoires sont liées, ce qui rend difficile de les préciser plus étroitement. Toutes choses égales par ailleurs, l'hydrogénation sera d'autant plus poussée que le catalyseur sera plus actif, que la température et la pression d'hydrogène seront plus élevées et que la vitesse de la charge sera plus faible. On peut opérer avec un ou plusieurs lits successifs de catalyseur, en mettant en œuvre les moyens connus d'élimination de la chaleur de réaction, par exemple recyclage du produit hydrogéné, à l'entrée ou en des points choisis de la zone de réaction.

La réaction d'éthérification au moyen d'un alcool, par exemple un alcool aliphatique de $C_1$ à $C_4$, de préférence le méthanol ou l'éthanol, est effectuée dans des conditions connues en soi, à savoir une température de 50 à 120 °C et une pression suffisante pour maintenir les réactifs au moins en partie en phase liquide. Le taux de conversion global du méthyl-2 butène-1 et du méthyl-2 butène-2 est, par exemple, de 40 à 90 % ou davantage. On peut opérer avec les réactifs en proportions équimoléculaires ou différentes. A la sortie de la zone d'éthérification, on peut séparer l'alcool non converti, par exemple par fractionnement ou par lavage.

Le catalyseur d'éthérification est un catalyseur acide, de préférence une résine échangeuse d'ions sous forme solide, les meilleurs résultats étant obtenus avec des résines sulfoniques macroporeuses solides, par exemple celles décrites dans le brevet US-A-3 037 052.

On peut opérer selon les techniques usuelles, par exemple avec un catalyseur en lit fixe ou dispersé, en un ou plusieurs lits, en recyclant éventuellement une partie des produits obtenus ou non convertis, soit tels quels, soit après réchauffage ou refroidissement. Un mode opératoire préféré consiste à faire passer les réactifs d'abord dans un réacteur à lit expansé de catalyseur puis dans un réacteur à lit fixe de catalyseur. On obtient ainsi une meilleure sélectivité et une durée de vie accrue du catalyseur.

L'alcool et les oléfines réactives (M2B1 et M2B2) peuvent être utilisés en proportions équimoléculaires ou en excès de l'un par rapport à l'autre, selon la technique connue.

Le fractionnement des produits obtenus peut être réalisé de manière quelconque, mais on peut également utiliser l'effluent du réacteur tel quel comme constituant d'essence ; cette façon de procéder est même préférée, comme on l'a vu plus haut.

Les fractions $C_5$ auxquelles s'applique plus particulièrement l'invention renferment, avant hydrogénation (que celle-ci ait lieu sur la coupe $C_5$ déjà isolée ou sur une coupe plus large qui inclut des hydrocarbures $C_5$ ; dans ce dernier cas on isole la coupe $C_5$ après hydrogénation, mais avant l'éthérification), au moins 10 % en mole de l'ensemble des hydrocarbures suivants : isoprène + M2B2 + M2B1 ; et au moins 10 % de mono-oléfines et dioléfines $C_5$ autres que les précédentes. Après hydrogénation la teneur en M2B1 + M2B2 est habituellement d'au moins 15 % en poids, le plus souvent entre 15 et 40 % en poids.

Après éthérification, la coupe $C_5$ renferme, par exemple, 40 à 70 % d'hydrocarbures saturés, 5 à 30 % d'hydrocarbures oléfiniques, 15 à 35 % d'éther et 2 à 10 % d'alcool. De préférence l'alcool est le méthanol et l'éther est le TAME.

### Exemple 1

On part d'une coupe $C_5$ de steam cracking et on l'hydrogène en présence d'un catalyseur en lit fixe à 0,3 % en poids de palladium sur alumine (surface spécifique : 80 $m^2$/g). On choisit trois ensembles de conditions opératoires A, B et C qui permettent de pousser plus ou moins loin l'hydrogénation (Tableau I). Seuls les ensembles B et C sont conformes à l'invention. Le cas A correspond à une hydrogénation classique. La composition de la charge et de chacun des produits de l'hydrogénation est donnée dans le tableau II. Le rendement pondéral en produit d'hydrogénation est pratiquement quantitatif dans les trois cas.

Tableau I

| Conditions opératoires | A | B | C |
|---|---|---|---|
| Température entrée réacteur (°C) | 50 | 50 | 50 |
| Température sortie réacteur (°C) | 120 | 130 | 150 |
| Pression bars | 35 | 35 | 35 |
| Pression partielle hydrogène (sortie réacteur) | 9 | 12 | 15 |
| VVH (volume/volume · heure) | 3,5 | 3 | 2 |

Tableau II

| Composition (% poids) | Charge | Produit A | Produit B | Produit C |
|---|---|---|---|---|
| Isoprène | 13 | 1 | 0,1 | < 0,1 |
| Cyclopentadiène | 25 | 0,2 | < 0,1 | < 0,1 |
| Pentadiène | 12 | 0,5 | < 0,1 | < 0,1 |
| M2B1 + M2B2 | 12 | 23,5 | 25,2 | 24,7 |
| M3B1 | 1 | 2 | < 0,1 | < 0,1 |
| n oléfines | 10 | 19 | 15,2 | 0,5 |
| Cyclopentène | 2 | 18,5 | 11 | < 0,1 |
| Saturés | 25 | 35,3 | 48,5 | 74,8 |

La coupe $C_4$ hydrogénée est ensuite éthérifiée selon une disposition qui comprend deux réacteurs successifs opérant en phase liquide ; le premier réacteur est du type à catalyseur maintenu en lit expansé par le courant ascendant des réactifs avec recyclage d'une partie de l'effluent à l'entrée de ce réacteur. Le second réacteur est du type à lit fixe. Dans les deux réacteurs, le catalyseur est une résine sulfonique macroporeuse (Amberlyst 15), sous forme de grains de 0,4 à 1 mm.

La température moyenne est de 72 °C dans le premier réacteur et 55 °C dans le second réacteur. Le rapport méthanol/M2B1 + M2B2 est de 1,3.

Une telle disposition a été décrite, par exemple, dans le brevet français 2 440 931.

On indique dans le tableau III la composition et les caractéristiques des produits, appelés respectivement A', B' et C'.

Tableau III

| Composition (% poids) | Produit A' | Produit B' | Produit C' |
|---|---|---|---|
| Hydrocarbures saturés | 31,2 | 42,2 | 65,7 |
| Oléfines totales | 41,9 | 29,2 | 6,2 |
| TAME | 21,3 | 22,7 | 22,3 |
| Méthanol | 5,6 | 5,9 | 5,8 |
| Indice de Brome | 96 | 67 | 14 |
| MON (Nombre d'octanes moteur avec 0,15 g/l Pb) | 86 | 87,2 | 88 |

# 0 035 935

On voit que les produits B' et C' présentent un MON plus élevé que celui du produit A'.

## Exemple 2

On effectue l'hydrogénation partielle d'une coupe $C_5$-200 °C de vapocraquage sur catalyseur au nickel sur alumine.

On fractionne le produit de l'hydrogénation et on soumet la coupe $C_5$ (point final : 60 °C) à un traitement d'éthérification dans les conditions de l'exemple 1.

Charge de l'hydrogénation

Distillation : 30-200 °C
Indice de brome : 70
Indice d'anhydride maléique : 90
% dioléfines + alkénylaromatiques : 23
% $C_5$ : 18
% soufre : 400 ppm

Conditions opératoires

Catalyseur nickel/alumine à 10 % en poids de Ni
P = 45 bars T entrée : 90 °C T sortie : 170 °C
VVH = 1,6

Ces conditions sont choisies de manière à permettre, outre l'hydrogénation des dioléfines et des alkénylaromatiques, une hydrogénation partielle des oléfines non éthérifiables, à savoir cyclopentène et n-pentènes.

Au terme de l'hydrogénation, on sépare la coupe $C_5$ par distillation.

Les résultats sont donnés dans le tableau IV : analyse des hydrocarbures $C_5$ présents dans l'essence initiale (colonne 1) et de la coupe $C_5$ séparée de l'essence hydrogénée (colonne 2) ; analyse de la coupe $C_5$ précitée, après éthérification (colonne 3).

Le rendement pondéral de l'hydrogénation est pratiquement quantitatif.

### Tableau IV

| Composition % poids | 1<br>des hydrocarbures $C_5$<br>de la charge $C_5$-200 °C<br>d'hydrogénation | 2<br>de la coupe $C_5$<br>après hydrogénation<br>et fractionnement | 3<br>du produit<br>final |
|---|---|---|---|
| n-pentane | 13,3 | 32,04 | 26,9 |
| Isopentane | 5,5 | 8,73 | 7,3 |
| Cyclopentane | 3 | 8,22 | 6,9 |
| Pentène-1 | 3,1 | 1,40 | 1,17 |
| Pentène-2 | 4,3 | 12,62 | 10,54 |
| M3B1 | 1 | 0,18 | 0,15 |
| M2B1 | 7,4 | 5,38 | 0,62 |
| M2B2 | 4,9 | 27,19 | 7,28 |
| Cyclopentène | 2,5 | 4,14 | 3,46 |
| Isoprène | 9 | } 0,1 | } 0,08 |
| Pentadiène | 9 | | |
| Cyclopentadiène | 37 | | |
| TAME | 0 | 0 | 28,2 |
| Méthanol | 0 | 0 | 7,4 |
| MON (Nombre d'octanes<br>moteur avec 0,15 g/l Pb) | — | 82,5 | 87,5 |

Il apparaît que, dans la coupe $C_5$ fractionnée après hydrogénation de la coupe totale $C_5$-200 °C, la teneur en oléfines éthérifiables est nettement supérieure à celle d'une coupe $C_5$ hydrogénée après fractionnement : ceci vient du fait que la dimérisation du cyclopentadiène, simultanée à l'hydrogénation, donne des hydrocarbures $C_{10}$. Ceux-ci sont éliminés lors du fractionnement subséquent de l'essence

5

hydrogénée, de sorte que la concentration relative en oléfines éthérifiables se trouve fortement accrue avec forte réduction simultanée de la teneur en hydrocarbures $C_5$ cycliques.

Cette élimination des cyclo-oléfines est favorable à l'obtention d'un indice d'octane élevé après éthérification.

## Exemple 3

On hydrogène une coupe $C_5$ de craquage catalytique (mélange A) sur catalyseur à 0,3 % de palladium sur alumine et on obtient les produits B et C (C plus hydrogéné que B), dans les conditions du tableau V. Le rendement pondéral est pratiquement quantitatif.

### Tableau V

| Conditions opératoires | B | C |
|---|---|---|
| T   entrée réacteur (°C) | 130 | 160 |
| T   sortie réacteur (°C) | 150 | 190 |
| VVH   (m³/m³ · h) | 5 | 4 |
| P   (bars) | 40 | 40 |

On obtient ainsi les produits du tableau VI.

### Tableau VI

| % poids | Coupe $C_5$ de craquage catalytique (A) | Produit d'hydro-traitement (B) | Produit d'hydro-traitement (C) |
|---|---|---|---|
| Saturés | 58,1 | 65,82 | 73,07 |
| Pentène 1 | 2,9 | 0,80 | 0,3 |
| Pentène 2-cis | 5,7 | 3,26 | 1,81 |
| Pentène 2-tr | 6,8 | 7,92 | 3,32 |
| M3B1 | 0,9 | < 0,1 | < 0,1 |
| M2B1 | 2,4 | 1,60 | 1,1 |
| M2B2 | 18,4 | 20,10 | 20,4 |
| Cyclopentène | 2,2 | 0,50 | < 0,1 |
| Dioléfines | 1,35* | < 0,1 | < 0,1 |
| IBr (gBr2/100 g) | 94 | 78 | 60 |
| F1 clair | 93 | 92 | 89,5 |
| F2 clair | 80,5 | 81,5 | 82,5 |

* dont isoprène : 0,4.

Le mélange A et les produits B et C d'hydrotraitement sont éthérifiés dans les mêmes conditions que dans l'exemple 1. On indique dans le tableau VII la composition et les caractéristiques des produits appelés respectivement A', B' et C'.

### Tableau VII

| | Produit A' | Produit B' | Produit C' |
|---|---|---|---|
| Composition (% poids) | | | |
| Hydrocarbures saturés | 51,7 | 58,3 | 64,8 |
| Oléfines totales | 24,2 | 16,6 | 10,3 |
| TAME | 19,1 | 19,9 | 19,7 |
| Méthanol | 5,0 | 5,2 | 5,2 |
| Indice de Brome | 55 | 37 | 23 |
| RON clair (F1) | 96,5 | 95,8 | 94,8 |
| RON éthylé 0,4 g/l | 103,8 | 103,3 | 102,5 |
| MON clair (F2) | 83 | 84,5 | 85,3 |
| RON éthylé 0,4 g/l | 89 | 91,5 | 93,2 |

0 035 935

## Revendications

1. Procédé de production d'une fraction d'essence présentant un indice d'octane moteur élevé et une teneur réduite en oléfines à partir d'une fraction $C_5$ insaturée d'hydrocarbures, dans lequel ladite fraction $C_5$ insaturée est d'abord soumise à une hydrogénation puis à une éthérification du méthyl-2 butène-1 et du méthyl-2 butène-2 par un alcool aliphatique ayant de 1 à 4 atomes de carbone, caractérisé en ce que l'on part d'une fraction $C_5$ renfermant au moins 10 % en poids d'un ensemble (A) formé par le méthyl-2 butène-1, le méthyl-2 butène-2 et éventuellement l'isoprène et au moins 10 % en poids d'un ensemble (B) formé par les monooléfines $C_5$ et éventuellement les dioléfines $C_5$ autres que celles de l'ensemble (A), et en ce que l'hydrogénation de la fraction $C_5$ est contrôlée de manière que la conversion en hydrocarbures saturés de l'ensemble (B) soit au moins de 30 %, la conversion en hydrocarbures saturés de l'ensemble (A) étant maintenue au maximum égale à 10 %, l'éthérification du méthyl-2 butène-1 et du méthyl-2 butène-2 étant ensuite effectuée de manière conventionnelle.

2. Procédé selon la revendication 1, dans lequel on soumet à l'hydrogénation une fraction $C_5$ déjà isolée et on opère à 50-200 °C, avec une température de sortie d'au moins 120 °C, sous une pression de 5 à 60 bars et à un débit horaire de charge liquide de 0,5 à 10 volumes par volume de catalyseur d'hydrogénation.

3. Procédé selon l'une des revendications 1 et 2, dans lequel l'hydrogénation est contrôlée pour permettre une conversion inférieure à 5 % de l'ensemble (A) et une conversion de 50-90 % de l'ensemble (B) formé par les autres monooléfines et dioléfines.

4. Procédé selon l'une des revendications 1 à 3, dans lequel l'hydrogénation est contrôlée de telle manière que la teneur en oléfines, après l'éthérification, soit inférieure à 20 % en poids.

5. Procédé selon l'une des revendications 1 à 3, dans lequel l'hydrogénation est contrôlée de telle manière que la teneur en oléfines, après l'éthérification, soit de 2 à 10 % en poids.

6. Procédé selon l'une des revendications 1 à 5, dans lequel la fraction $C_5$ insaturée d'hydrocarbures est en coupe $C_5$ de cracking catalytique.

7. Procédé selon l'une des revendications 1 à 5, dans lequel la fraction $C_5$ insaturée d'hydrocarbures est une coupe $C_5$ de cracking à la vapeur d'eau.

8. Procédé selon la revendication 1, dans lequel l'hydrogénation est effectuée sur une essence renfermant ladite fraction $C_5$ et on opère à 50-200 °C, avec une température de sortie d'au moins 150 °C, sous une pression de 5 à 60 bars et à un débit horaire de charge liquide de 0,5 à 10 volumes par volume de catalyseur d'hydrogénation.

9. Procédé selon l'une des revendications 1 à 8, dans lequel l'hydrogénation est poursuivie jusqu'à obtention d'une teneur de 15 à 40 % en poids de méthyl-2 butène-1 et de méthyl-2 butène-2.

10. Procédé selon l'une des revendications 1 à 9, dans lequel l'alcool libre présent après éthérification est laissé dans la coupe $C_5$, de manière à obtenir un produit renfermant 40 à 70 % d'hydrocarbures saturés $C_5$, 5 à 30 % d'hydrocarbures oléfiniques $C_5$, 15 à 30 % d'éther et 2 à 10 % d'alcool.

## Claims

1. A process for producing a gasoline fraction of high motor octane number and low olefins content from a $C_5$ unsaturated hydrocarbon fraction, wherein said $C_5$ unsaturated fraction is first subjected to hydrogenation and then to etherification of 2-methyl-1-butene and 2-methyl-2-butene with an aliphatic alcohol having from 1 to 4 carbon atoms, characterized in starting with a $C_5$ fraction comprising at least 10 % by weight of a mixture (A) comprising 2-methyl-1-butene, 2-methyl-2-butène and optionally isoprene and at least 10 % by weight of a mixture (B) comprising the $C_5$ monoolefins and optionally the $C_5$ diolefins other than those of the mixture (A), controlling the hydrogenation of the $C_5$ fraction in such manner that the conversion rate of the mixture (B) to saturated hydrocarbons be at least 30 % and the conversion rate of the mixture (A) to saturated hydrocarbons at most 10 %, and thereafter etherifying 2-methyl-1-butene and 2-methyl-2-butene in a conventional manner.

2. A process according to claim 1, wherein the $C_5$ fraction subjected to hydrogenation is a previously isolated $C_5$ fraction and the hydrogenation is effected at 50-200 °C, with an outlet temperature of at least 120 °C, a pressure of 5 to 60 bars and a hourly feed rate of the liquid charge of 0.5 to 10 volumes per volume of hydrogenation catalyst.

3. A process according to one of claims 1 and 2, wherein the hydrogenation is so controlled that the conversion of the mixture (A) is lower than 5 % and the conversion of the mixture (B) of the other monoolefins and diolefins ranges from 50 to 90 %.

4. A process according to one of claims 1 to 3, wherein the hydrogenation is so controlled as to obtain an olefin concentration after etherification of at most 20 % by weight.

5. A process according to one of claims 1 to 3, wherein the hydrogenation is so controlled as to obtain an olefin concentration after etherification of from 2 to 10 % by weight.

6. A process according to one of claims 1 to 5, wherein the unsaturated $C_5$ hydrocarbon fraction is a $C_5$ catalytic cracking cut.

7. A process according to one of claims 1 to 5, wherein the unsaturated $C_5$ hydrocarbon fraction is a

7

C₅ steam-cracking cut.

8. A process according to claim 1, wherein the hydrogenation is effected with a gasoline comprising said C₅ fraction at a temperature of 50-220 °C, at an outlet temperature of at least 150 °C, a pressure of 5 to 60 bars and a hourly feed rate of the liquid charge of 0.5 to 10 volumes per volume of the hydrogenation catalyst.

9. A process according to one of claims 1 to 8, wherein the hydrogenation is so continued as to obtain a 15 to 40 % b.w. content of 2-methyl-1-butene and 2-methyl-2-butene.

10. A process according to one of claims 1 to 9, wherein the free alcohol present after etherification is left in the C₅ cut so as to obtain a product comprising 40 to 70 % of C₅ saturated hydrocarbons, 5 to 30 % of C₅ olefinic hydrocarbons, 15 to 30 % of ether and 2 to 10 % of alcohol.


## Ansprüche

1. Verfahren zur Herstellung einer Treibstoff-Fraktion mit einem erhöhten Oktan-Motor-Index und einem reduzierten Olefin-Gehalt, ausgehend von einer ungesättigten C₅-Kohlenwasserstoff-Fraktion, indem die genannte ungesättigte C₅-Fraktion zuerst einer Hydrierung und dann einer Verätherung von 2-Methyl-Buten-1 und von 2-Methyl-Buten-2 durch einen aliphatischen Alkohol mit 1 bis 4 Kohlenstoffatomen unterworfen wird, dadurch gekennzeichnet, daß man ausgeht von einer C₅-Fraktion mit wenigstens 10 Gew.-% einer Menge (A), gebildet aus dem 2-Methyl-Buten-1, dem 2-Methyl-Buten-2 und gegebenenfalls Isopren und wenigstens 10 Gew.-% einer Menge (B) gebildet aus C₅-Mono-Olefinen und gegebenenfalls C₅-Diolefinen, und zwar anderen als die der Menge (A), und daß man die Hydrierung der C₅-Fraktion in der Weise steuert, daß die Umwandlung zu gesättigten Kohlenwasserstoffen der Menge (B) wenigstens 30 % beträgt, wobei die Umwandlung zu gesättigten Kohlenwasserstoffen der Menge (A) auf einem Maximum von 10 % gehalten wird, und die Verätherung von 2-Methyl-Buten-1 und von 2-Methyl-Buten-2 anschließend in konventioneller Weise durchgeführt wird.

2. Verfahren gemäß Anspruch 1, dadurch gekennzeichnet, daß man eine bereits isolierte C₅-Fraktion der Hydrierung unterwirft und man bei 50 bis 200 °C arbeitet, bei einer Ausgangstemperatur von wenigstens 120 °C, unter einem Druck von 5 bis 60 bar und einer Stundenleistung an flüssiger Charge von 0,5 bis 10 Volumina pro Volumen des Hydrierungskatalysators.

3. Verfahren nach einem der Ansprüche 1 und 2, dadurch gekennzeichnet, daß die Hydrierung gesteuert wird hinsichtlich einer Umwandlung der Menge (A) von weniger als 5 % und einer Umwandlung von 50 bis 90 % der Menge (B), gebildet durch die anderen Mono-Olefine und Diolefine.

4. Verfahren gemäß einem der Ansprüche 1 bis 3, dadurch gekennzeichnet, daß die Hydrierung in einer solchen Weise gesteuert wird, daß der Gehalt an Olefinen, nach Verätherung, weniger als 20 Gew.-% beträgt.

5. Verfahren gemäß einem der Ansprüche 1 bis 3, dadurch gekennzeichnet, daß die Hydrierung in einer solchen Weise gesteuert wird, daß der Gehalt an Olefinen, nach der Verätherung 2 bis 10 Gew.-% beträgt.

6. Verfahren gemäß einem der Ansprüche 1 bis 5, dadurch gekennzeichnet, daß die ungesättigte C₅-Kohlenwasserstoff-Fraktion ein C₅-Schnitt der katalytischen Crackung ist.

7. Verfahren gemäß einem der Ansprüche 1 bis 5, dadurch gekennzeichnet, daß die ungesättigte C₅-Kohlenwasserstoff-Fraktion ein C₅-Schnitt der Wasserdampf-Crackung ist.

8. Verfahren gemäß Anspruch 1, dadurch gekennzeichnet, daß die Hydrierung durchgeführt wird mit einem Benzin, das die genannte C₅-Fraktion umfasst, und man bei 50 bis 220 °C arbeitet, mit einer Ausgangstemperatur von mindestens 150 °C, unter einem Druck von 5 bis 60 bar und einer Stundenleistung an flüssiger Charge von 0,5 bis 10 Volumina pro Volumen Hydrierungskatalysator.

9. Verfahren gemäß der Ansprüche 1 bis 8, dadurch gekennzeichnet, daß die Hydrierung bis zum Erhalt eines Gehaltes von 15 bis 40 Gew.-% an 2-Methyl-Buten-1 und 2-Methyl-Buten-2 durchgeführt wird.

10. Verfahren gemäß einem der Ansprüche 1 bis 9, dadurch gekennzeichnet, daß der nach Verätherung anwesende freie Alkohol im C₅-Schnitt belassen wird, und zwar zum Erhalten eines Produktes, das 40 bis 30 % olefinische C₅-Kohlenwasserstoffe, 15 bis 30 % Äther und 2 bis 10 % Alkohol enthält.